(19) Europäisches Patentamt

European Patent Office

Office européen des brevets

(11) **EP 0 680 693 B1**

(12) **FASCICULE DE BREVET EUROPEEN**

(45) Date de publication et mention
de la délivrance du brevet:
**22.06.2005   Bulletin 2005/25**

(51) Int Cl.⁷: **A01N 25/18**, A01N 37/06
// (A01N37/06, 61:00, 25:18)

(21) Numéro de dépôt: **95400916.3**

(22) Date de dépôt: **25.04.1995**

(54) **Dispositif pour lutter contre les insectes**

Vorrichtung zur Insektenbekämpfung

Device to control insects

(84) Etats contractants désignés:
**CH DE ES FR GB GR IT LI SE**

(30) Priorité:  **06.05.1994  FR 9405685**

(43) Date de publication de la demande:
**08.11.1995   Bulletin 1995/45**

(73) Titulaire: **CALLIOPE**
**64150 Nogueres (FR)**

(72) Inventeurs:
• **Caupin, Henri-Jean**
  **F-78000 Versailles (FR)**
• **Leroux, Roland**
  **F-92370 Chaville (FR)**
• **Guillon, Michel, (Ste Calliope)**
  **F-64000 Pau (FR)**

(74) Mandataire: **Kédinger, Jean-Paul et al**
**Cabinet Malemont**
**42, avenue du Président Wilson**
**75116 Paris (FR)**

(56) Documents cités:
**EP-A- 0 167 633**          **EP-A- 0 338 732**
**EP-A- 0 542 080**          **EP-A- 0 542 081**
**EP-A- 0 596 772**          **DE-A- 3 611 137**

• **CHEMICAL ABSTRACTS, vol. 87, no. 17, 24
  Octobre 1977 Columbus, Ohio, US; abstract no.
  128792, M.BAR-ZEEV 'Materials attractive or
  repellent to larvae of Trogoderma granarium' &
  ISR.J.ENTOMOL., vol. 11, 1976 pages 61-72,**
• **DATABASE WPI Week 7813 Derwent
  Publications Ltd., London, GB; AN 78-24032A
  [13] & JP-A-53 015 423 (SANYO) , 13 Février 1978**
• **DATABASE WPI Week 8143 Derwent
  Publications Ltd., London, GB; AN 81-78581D
  [43] & JP-A-56 115 377 (S T KAGAKU KOGYO) ,
  10 Septembre 1981**
• **CHEMICAL ABSTRACTS, vol. 104, no. 11, 17
  Mars 1986 Columbus, Ohio, US; abstract no.
  85629, Y.KUWAHARA ET AL. '(Z)-5-and
  (E)-5-undecenoic acid: identification of the sex
  pheromone of the varied carpet beetle,
  Anthrenus verbasci L. (Coleoptera:
  Dermestidae)' & APPL. ENTOMOL.ZOOL., vol.
  20, no. 3, 1985 pages 354-356,**
• **DATABASE WPI Week 8315 Derwent
  Publications Ltd., London, GB; AN 83-36014K
  [15] & JP-A-58 039 604 (AGENCY OF IND SCI
  TECH) , 8 Mars 1983**

## Description

La présente invention concerne un dispositif pour lutter contre les insectes et plus particulièrement une résine thermoplastique chargée en phéromones et qui les diffuse lentement dans l'air. La protection des cultures contre les insectes a fait appel à des produits de synthèse organique à large spectre d'action destinés à tuer de manière non spécifique les insectes. Les quantités nécessaires sont importantes.

Ces produits sont dangereux pour l'environnement, certains ont été interdits (DDT).

On peut contrôler les insectes par des médiateurs chimiques qui régulent les relations d'insecte à insecte ou les relations plante-insecte.

Ces médiateurs chimiques sont les phéromones, les kairomones et les allomones.

A la différence des produits conventionnels de destruction des insectes, ces médiateurs s'utilisent en très faibles quantités, par exemple deux ou trois traitements de 10 à 20 grammes par hectare ou diffusion continue de quelques milligrammes par hectare et par heure pendant un ou plusieurs mois. La présente invention concerne un dispositif pour cette diffusion lente.

Le brevet US 4,734,281 décrit une méthode pour diffuser des phéromones sexuelles d'insectes dans l'air. Ces phéromones modifient le comportement en empêchant la reproduction de certains insectes. Ces phéromones qui se présentent sous forme liquide sont mises dans des sacs en polyéthylène. Les phéromones diffusent à travers le sac et se répandent dans l'air. L'exemple 1 montre des tubes en polyéthylène de diamètre intérieur 0,8 mm, diamètre extérieur 1,4 mm et longueur 200 mm remplis de 80 mg d'un mélange de deux phéromones. Puis les extrémités des tubes sont scellés. A 30° C dans un courant d'air de 0,5 m/s, on observe une diffusion de 0,4 et 0,5 mg par jour de chaque phéromone.

US 5,142,817 décrit des feuilles ou des rubans formés d'une feuille de polymère insoluble dans l'eau et collée sur une feuille d'une matrice hydrophile. Cette matrice peut être en fibres cellulosiques, polyester, polyacétate, polyvinylalcool ou polyoxyéthylèneglycol. Cette matrice contient un plastifiant tel que du polyoxyéthylèneglycol ou une solution de sorbitol et aussi un produit biologiquement actif. Ces rubans servent à envelopper des arbres. Le produit biologiquement actif est libéré par une atmosphère humide et sert à protéger les arbres.

EP 367 140 décrit des copolymères de l'éthylène et de l'acétate de vinyle contenant 5 à 30 % de p-menthane-3,8 diol, répulseur d'insectes. On peut en faire des granulés disposés sur les racines des arbres ou des colliers pour animaux domestiques.

La demande japonaise 87 JP-069396 publiée sous le no KOKAI JP 63238001 décrit des rubans pour enrouler autour des branches d'arbres constitués d'une feuille photodégradable recouverte d'un mélange, d'un insecticide et d'un prépolymère de polyétheruréthane ou polyesteruréthane.

La demande japonaise 81 JP-024042 publiée sous le no KOKAI JP 57 139005 décrit des compositions de phéromones et d'un liant contenant 4 à 20 % de phéromones. Le liant est du caoutchouc SBR ou silicone. On utilise aussi un solvant tel que le chlorure de méthylène, le benzène, un alcool..., des charges telles que de la cellulose, de la silice, du charbon actif ou du carbonate. Le produit se présente sous forme de pâte.

Les brevets FR 2 579 983 décrit des polymères chargés de parfums qui diffusent ces parfums dans l'air ambiant.

L'art antérieur montre la diffusion des phéromones liquides à travers des récipients en polyéthylène. La préparation de ces tubes en polyéthylène, leur chargement en phéromones, le scellement puis le transport et la disposition dans les cultures est compliquée.

La diffusion de phéromones à partir de pâtes chargées entre 4 à 20 % de phéromones nécessite le transport et la disposition de charges importantes. De plus, la diffusion à partir d'une pâte n'est pas aussi régulière que la diffusion d'un liquide au travers d'une paroi.

Le brevet EP 338732 décrit un copolymère à blocs qui est le produit de réaction d'un polydiorganosiloxane avec un diisocyanate chargé de phéromones.

Le brevet EP 542080 décrit des copolymères à blocs polyamides et blocs polyéthers chargés d'insecticide ou d'acaricide.

Le brevet EP 542081 décrit des élastomères thermoplastiques du type copolyetherester chargés d'insecticide volatil.

La présente invention concerne un mélange comprenant (i) un élastomère thermoplastique choisi parmi les copolymères à blocs polyethers et blocs polyesters, les copolyetherimides esters, les copolymères à blocs polyamides et blocs polyethers, (ii) au moins un médiateur chimique agissant sur le comportement des insectes et acariens et choisi parmi les phéromones les kairomones ou les allomones et (iii) de l'acide undécylénique ou ses esters d'alkyle en $C_1$ à $C_6$.

Selon une forme avantageuse l'ester, de l'acide undécylénique est l'undécylénate de méthyle.

Selon une autre forme avantageuse le mélange se présente sous forme de granulés ou de bâtonnets.

L'invention concerne aussi un procédé de protection à titre préventif ou curatif d'un site contre les insectes et les acariens déprédateurs des cultures caractérisé en ce qu'il comprend l'application sur le site du mélange de l'invention.

L'élastomère thermoplastique peut comprendre des motifs polyéthers et des motifs polyesters. Ce sont par exemple des blocs polyéthers et des blocs polyesters.

Ces produits sont connus sous le nom de polyesters élastomères et sont thermoplastiques.

Les polyéthers sont par exemple du polyéthylène glycol, du polypropylène glycol ou du polytétraméthylène glycol.

La masse molaire $\overline{M}$n de ces polyéthers peut être comprise entre 250 et 6000.

Ces polyéthers se condensent avec au moins un diacide carboxylique pour former les segments souples des polyesters élastomères.

Les blocs polyesters résultent par exemple de la condensation d'au moins un diol avec au moins un diacide carboxylique. Le diol peut être le glycol, le propanediol ou le butanediol. Le diacide peut être l'acide téréphtalique. Ces blocs forment les segments durs du polyester élastomère.

Les segments durs peuvent comprendre plusieurs motifs résultant de l'action d'un diol sur un diacide.

Les segments souples peuvent comprendre plusieurs motifs résultant de l'action du polyéther sur un diacide. Les segments durs et les segments souples sont attachés par des liaisons ester. De tels polyesters élastomères sont décrits dans les brevets EP 402 883 et EP 405 227.

Les élastomères thermoplastiques à motifs polyéthers peuvent aussi être des copolyétherimides ester. Les segments souples sont formés par la réaction de polyether diamines avec des composés tricarboxyliques ou anhydrides d'acide carboxylique contenant un groupe carboxylique tel que par exemple l'anhydride trimellitic. Les polyéthers diamines utilisés ont une masse molaire moyenne de 600 à 12000. Ces polyetherdiamines peuvent eux mêmes être issus de polyethylèneglycol, polypropylèneglycol ou polytetraméthylèneglycol.

Les blocs polyesters formant les segments dans des copolyetherimides ester résultent par exemple de la condensation d'au moins un diol avec au moins un diacide carboxylique. Le diol peut être le glycol, le propanediol ou le butanediol. Le diacide peut être l'acide terephtalique. De tels copolyetherimides ester sont décrits dans EP 402 883 et EP 405 227.

Quant aux élastomères thermoplastiques qui comprennent des motifs polyéthers et des motifs amides, ils peuvent être répartis de façon statistique ou ordonnée. Les motifs amides peuvent être isolés ou groupés dans des oligomères provenant de la réaction d'une diamine avec un diacide ou de la condensation d'un alpha oméga amino acide carboxylique.

Les élastomères les plus utilisés sont ceux comprenant des blocs polyamides et des blocs polyéthers. Les blocs polyamides peuvent provenir soit de la condensation d'un lactame ou d'un alpha oméga amino acide, soit de la réaction d'un diacide et d'une diamine.

Ces blocs polyamides peuvent être préparés en présence d'un diacide. On obtient des blocs polyamides à extrémités acide carboxylique. La masse molaire $\overline{M}$n des blocs polyamides peut être entre 600 et 5000.

Les polyéthers sont par exemple du polyéthylène glycol, du polypropylène glycol ou du polytétraméthylène glycol de masse molaire $\overline{M}$n entre 250 et 6000, plusieurs polyéthers peuvent être enchaînés par exemple par des diacides dans le cas des polyétherdiols.

On ne sortirait pas du cadre de l'invention en utilisant d'autres élastomères à blocs polyamides et à blocs polyéthers. Ces produits peuvent être préparés par réaction de lactame ou alpha oméga amino acide de diacide et de polyétherdiol ou polyétherdiamine. On peut aussi condenser des blocs polyamides à extrémités aminées avec des polyéthers diacides, condenser des blocs polyamides à extrémités acides avec des polyetherdiamines.

Tous ces produits sont décrits dans les brevets US 4,331,786 - 4,115,475 - 4,195,015 - 4,839,441 et 4,864,014.

Les médiateurs chimiques sont des produits connus.

Les esters d'alkyle en $C_1$ à $C_6$ sont avantageusement $C_1$ à $C_3$ comme les esters méthyliques, éthyliques ou isopropyliques. Le mélange de l'invention peut contenir jusqu'à 90 parties de médiateur chimique pour 100 parties d'élastomère.

La composition de l'invention peut aussi contenir jusqu'à 90 parties d'acide undécylénique ou ses esters d'alkyle en $C_1$ à $C_6$ pour 100 parties d'élastomère.

Le mélange de l'invention peut se présenter sous forme de granulés, de billes, bâtonnets et, en règle générale, toute forme permettant de le transporter et le répandre ou le disposer facilement dans les cultures ou les plantations.

Le mélange d'élastomère thermoplastique et de médiateur chimique peut se faire par trempage de l'élastomère dans le médiateur ou dans une solution contenant le médiateur. Cette solution peut être à base d'un alcool.

On peut incorporer l'acide undécylénique ou ses dérivés dans l'élastomère puis procéder comme ci-dessus.

On peut de préférence préparer une solution (ci-après la solution) de médiateur chimique dans l'acide undécylénique ou ses dérivés esters d'alkyle en $C_1$ à $C_6$ puis incorporer cette solution dans l'élastomère par exemple selon le procédé décrit dans le brevet FR 2 697 848.

On utilise de préférence l'undécylénate de méthyle.

La solution peut être mélangée à des granulés de l'élastomère, on prépare ainsi un mélange maître qu'on incorpore ensuite dans l'élastomère selon les techniques classiques des matières plastiques.

On peut aussi diluer la solution dans un alcool puis mélanger avec l'élastomère. On observe un gonflement de l'élastomère, l'alcool s'évapore et il reste le produit de l'invention à savoir l'élastomère, le médiateur chimique et l'acide undécylénique ou ses dérivés. De préférence, on utilise un alcool saturé en $C_1$ à $C_6$.

## Exemple 1

On prépare le mélange suivant :

| Phéromone | 3 g |
| Undécylénate de méthyle | 27 g |
| Elastomère | 100 g |

La phéromone est celle de la sésamie du maïs dont certains composants sont communs à ceux de CHILO SUPPRESSALIS.
L'élastomère est formé de blocs polyamide à extrémités acide carboxylique reliés à des blocs polyéther à extrémités OH par des fonctions ester. Les blocs polyamides dérivent du lactame 12, les blocs polyéthers sont du polytétraméthylène glycol.
Le mélange se présente sous forme de bâtonnets de diamètre 20 mm et longueur 150 mm.
Les bâtonnets ont été placés dans des tunnels balayés à l'air, on a mesuré les quantités de phéromones diffusées. Les quantités diffusées ont été mesurées pendant 120 jours, les valeurs ont été constantes.

## Exemple 2

On a reproduit l'exemple 1 avec une autre phéromone, celle de CHILO SUPPRESSALIS, un des ravageurs du riz. On a obtenu les mêmes résultats.

## Revendications

1. Mélange comprenant :

   (i) un élastomère thermoplastique choisi parmi les copolymères à blocs polyethers et blocs polyesters, les copolyetherimides esters, les copolymères à blocs polyamides et blocs polyethers, (ii) au moins un médiateur chimique agissant sur le comportement des insectes et acariens et choisi parmi les phéromones, les kairomones ou les allomones et (iii) de l'acide undécylénique ou ses esters d'alkyle en $C_1$ à $C_6$.

2. Mélange selon la revendication 1 **caractérisé en ce que** l'ester de l'acide undécylénique est l'undécylénate de méthyle.

3. Mélange selon l'une des revendications 1 à 2 **caractérisé en ce qu'**il se présente sous forme de granulés ou de bâtonnets.

4. Procédé de protection à titre préventif ou curatif d'un site contre les insectes et les acariens déprédateurs des cultures **caractérisé en ce qu'**il comprend l'application sur le site du mélange selon l'une quelconque des revendications 1 à 3.

## Patentansprüche

1. Gemisch bestehend aus: (i) einem thermoplastischen Elastomer, welches ausgewählt ist aus Copolymeren von Polyetherblöcken und Polyesterblöcken, Copolyetherimidestern, Copolymeren aus Polyamidblöcken und Polyetherblöcken, (ii) mindestens einem chemischen Botenstoff, der auf das Verhalten von Insekten und Milben einwirkt und ausgewählt ist aus Pheromonen, Kairomonen oder Allomonen sowie (iii) Undecylensäure oder deren $C_1$ bis $C_6$ Alkylester.

2. Gemisch nach Anspruch 1, **dadurch gekennzeichnet, daß** der Undecylensäureester Methylundecylenat ist.

3. Gemisch nach Anspruch 1 und 2, **dadurch gekennzeichnet, daß** es in Form von Körnern oder Stäbchen vorliegt.

4. Verfahren zum vorbeugenden oder bekämpfenden Schutz eines Gebietes gegenüber kulturschädigenden Insekten und Milben, **dadurch gekennzeichnet, daß** es die Anwendung des Gemischs nach einem der Ansprüche 1 bis 3 in dem Gebiet umfaßt.

## Claims

1. A mixture comprising :

   (i) a thermoplastic elastomer selected among the polyether block polyester block copolymers, the copolyetherimide esters and the polyamide block polyether block copolymers,
   (ii) at least one chemical mediator acting on the behavior of insects and acarids and selected among the pheromones, the kairomones and the allomones ; and
   (iii) undecylenic acid or $C_1$- $C_6$- alkyl esters thereof.

2. The mixture according to claim 1, **characterized in that** the undecylenic acid ester is methyl undecylenate.

3. The mixture according to any one of claims 1 and 2, **characterized in that** it is in the form of granules or sticks.

4. A method for the preventive or curative protection of a site against insects and acarids which feed on crops, **characterized in that** it comprises applying onto the site the mixture according to any one of claims 1 to 3.